# FASCICULE DE BREVET EUROPEEN

(11) **EP 1 274 946 B1**
(45) Date de publication et mention de la délivrance du brevet: **06.06.2007**
(21) Numéro de dépôt: 01925643.7
(22) Date de dépôt: 13.04.2001
(51) Int. Cl.: F16B 2/24

(54) **Dispositif de blocage de deux elements allongés téléscopiques**
Vorrichtung für die Verriegelung zweier teleskopierbarer länglicher Elemente
Device for locking two telescopic elongated elements

(30) Priorité: 17.04.2000 FR 0004936
(43) Date de publication de la demande: 15.01.2003
(73) Titulaire: Guidetti, Pascal, 38420 Revel (FR)
(72) Inventeur: Guidetti, Pascal, 38420 Revel (FR)
(74) Mandataire: Casalonga, Axel
(86) Numéro de dépôt international: PCT/FR2001/001145
(87) Numéro de publication internationale: WO 2001/079709

(56) Documents cités:
- WO-A-03/010439
- FR-A- 2 522 743
- GB-A- 2 247 899
- GB-A- 2 258 151
- US-A- 836 303
- US-A- 2 495 674
- US-A- 5 595 410

## Description

La présente invention concerne un dispositif de blocage de deux éléments allongés dont un premier coulisse dans un second de façon télescopique.

Pour bloquer dans une position longitudinale déterminée deux éléments télescopiques, il est connu de pourvoir l'extrémité de l'élément extérieur d'une bague conique à fentes longitudinales et d'un écrou de façon à pincer cette bague fendue et l'appliquer contre l'élément intérieur.

Par le document de brevet FR-A-2 768 200, on sait également immobiliser dans un sens deux éléments allongés télescopiques en découpant en biseau l'extrémité de l'élément extérieur et en disposant autour de l'élément intérieur une rondelle qui, lorsqu'elle vient en appui contre l'extrémité du biseau, s'incline et bloque l'élément intérieur dans le sens de son enfoncement dans l'élément extérieur.

Par le document de brevet US-A-836 303, on sait également immobiliser dans un sens deux éléments allongés télescopiques par l'intermédiaire d'une rondelle de blocage disposée autour du premier élément et placée entre deux appuis longitudinalement opposés, comprennent un organe élastique de rappel agissant dans ledit sens longitudinal sur la rondelle, et une deuxième rondelle de blocage (organe de basculement) articulé sur ledit second élément, avec un organe entretoise et un organe de commande qui, par l'intermédiaire de l'organe entretoise, agit sur la rondelle de façon à l'écarter de sa position extrême précitée à l'encontre dudit moyen de rappel, en réduisant son inclinaison, afin de libérer le premier élément par rapport au second élément.

La présente invention a pour but de proposer un dispositif de blocage de deux éléments télescopiques plus perfectionné.

Selon l'invention, le dispositif de blocage de deux éléments allongés, dont un premier coulisse dans un second de façon télescopique, comprend :
des premiers moyens pour bloquer dans un premier sens longitudinal le premier élément par rapport au second élément, qui comprennent une première rondelle de blocage disposée autour du premier élément et dont une partie circonférentielle est placée entre deux premiers appuis longitudinalement opposés dudit second élément et un premier organe élastique de rappel placé entre ledit second élément et ladite première rondelle et agissant dans ledit sens longitudinal sur la première rondelle en un endroit éloigné desdits premiers appuis de manière à amener la première rondelle dans une position inclinée extrême par rapport au premier élément dans laquelle deux parties opposées de cette première rondelle sont en contact avec le premier élément afin de bloquer le premier élément par rapport au second élément dans ledit sens longitudinal ;
des seconds moyens pour bloquer dans l'autre sens longitudinal le premier élément par rapport au second élément qui comprennent une seconde rondelle disposée autour du premier élément et dont une partie circonférentielle est placée entre deux seconds appuis longitudinalement opposés dudit second élément et un second organe élastique de rappel placé entre ledit second élément et ladite seconde rondelle et agissant dans ledit autre sens longitudinal sur la seconde rondelle en un endroit éloigné desdits seconds appuis de manière à amener la seconde rondelle dans une position inclinée extrême par rapport au premier élément dans laquelle deux parties opposées de cette seconde rondelle sont en contact avec le premier élément afin de bloquer le premier élément par rapport au second élément dans ledit autre sens longitudinal ;
un organe de basculement articulé sur ledit second élément ;
un premier organe entretoise placé entre la première rondelle et l'organe de basculement ;
un second organe entretoise placé entre la seconde rondelle et ledit organe de basculement ;
et un organe de commande permettant d'agir sur l'organe de basculement, de telle sorte qu'une action sur cet organe de commande fait basculer l'organe de basculement qui, par l'intermédiaire des organes entretoises, agit sur lesdites rondelles de façon à les écarter de leurs positions extrêmes précitées à l'encontre desdits moyens de rappel, en réduisant leur inclinaison, afin de libérer le premier élément par rapport au second élément.

Selon l'invention, lesdits premiers et seconds moyens de blocage sont de préférence disposés de part et d'autre dudit organe de basculement, ledit organe de basculement agissant en sens opposés sur lesdits organes entretoises.

Selon l'invention, ledit organe de basculement comprend de préférence une rondelle qui entoure à distance ledit premier élément et qui est montée de façon articulée sur le second élément, radialement à ce dernier.

Selon l'invention, lesdites rondelles sont de préférence disposées dans des logements annulaires intérieurs du second élément.

Selon l'invention, lesdits organes entretoises comprennent de préférence des tiges mobiles longitudinalement dans des canaux du second élément.

Selon l'invention, ledit organe de commande comprend de préférence une tige longitudinale mobile longitudinalement dans un canal du second élément.

Selon l'invention, ledit organe de commande comprend de préférence un prolongement dudit organe de basculement, qui s'étend à l'extérieur du second élément.

Selon l'invention, le second élément comprend de préférence deux parties assemblées dont le plan de contact entre elles s'étend selon un plan longitudinal passant par l'axe desdits éléments. Lesdits organes de rappel, lesdits organes entretoises et ledit organe de commande sont de préférence disposés entre lesdites parties assemblées du second élément et ledit organe de basculement est de préférence articulé sur le second élément selon un axe perpendiculaire audit plan de contact.

La présente invention sera mieux comprise à l'étude d'un dispositif de blocage de deux éléments allongés télescopiques décrit à titre d'exemple non limitatif et illustré par le dessin sur lequel :
- la figure 1 représente une coupe longitudinale d'un dispositif de blocage de deux éléments allongés télescopiques, en position bloquée ;
- la figure 2 représente une coupe longitudinale du dispositif de la figure 1 en position débloquée ;
- les figures 3, 4, 5 et 6 montrent des coupes radiales selon III-III, IV-IV, V-V et VI-VI du dispositif représenté sur la figure 2, en différents endroits de sa longueur ;
- la figure 7 représente une coupe longitudinale d'une variante du dispositif de blocage précité ;
- la figure 8 représente une coupe radiale selon VIII-VIII du dispositif de la figure 7 ;
- et la figure 9 représente une application du dispositif de blocage précité à un bâton.

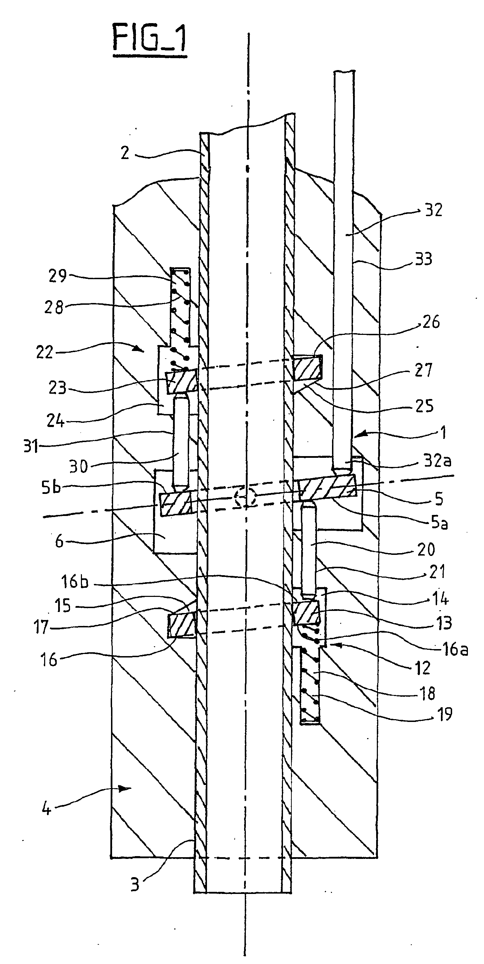

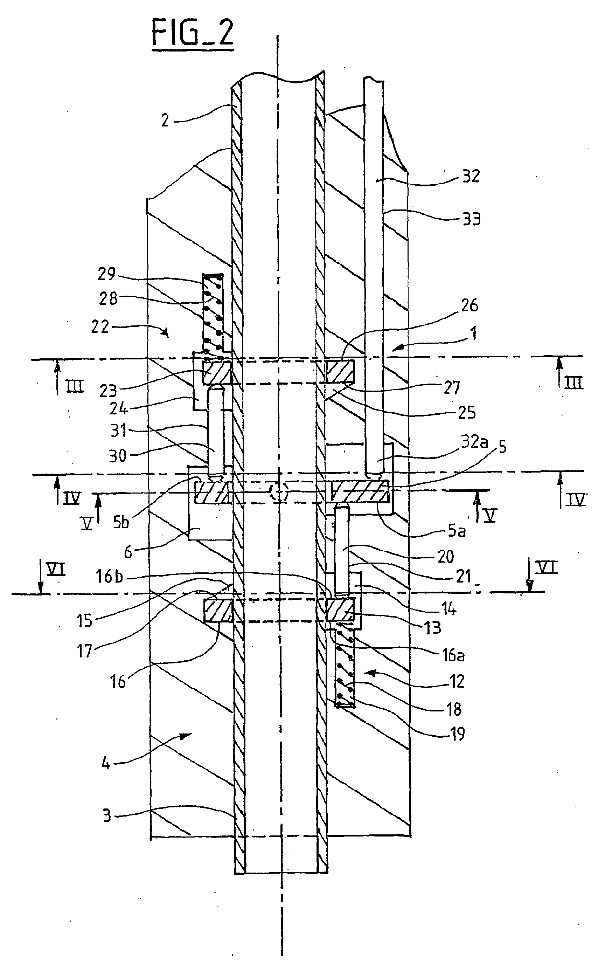

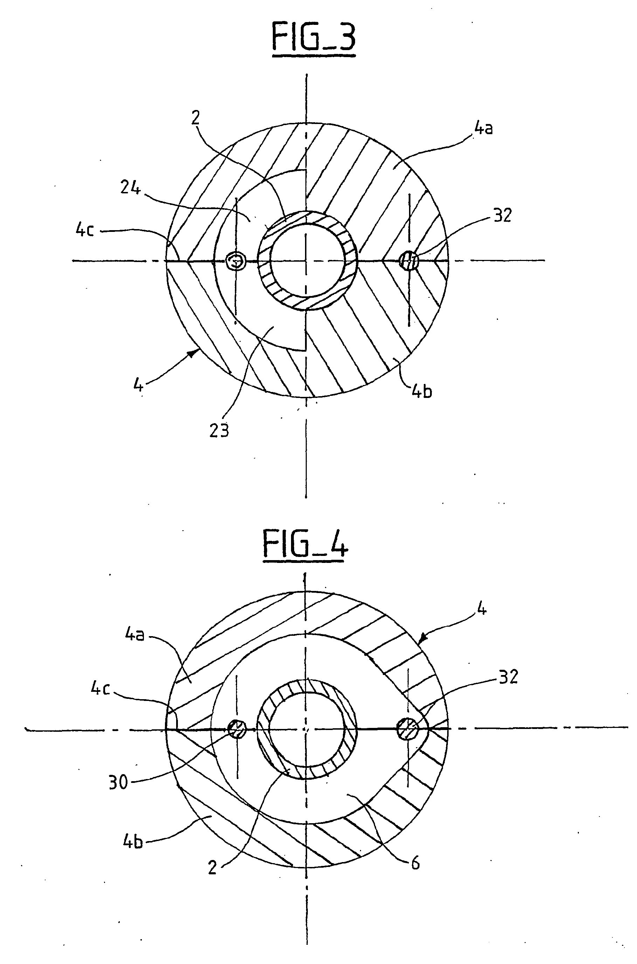

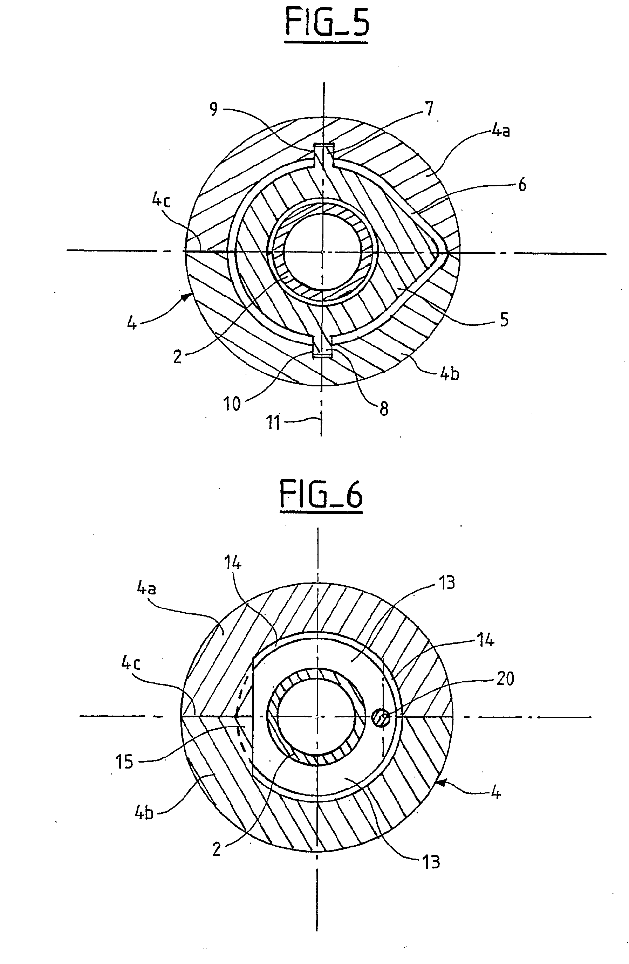

En se reportant aux figures 1 à 6, on voit qu'on a représenté un dispositif de blocage 1, dans le sens longitudinal et l'un par rapport à l'autre, d'un élément allongé intérieur 2 coulissant dans un canal 3 d'un élément allongé extérieur 4, ces éléments 2 et 4 étant cylindriques.

En se reportant plus précisément aux figures 1, 2, 4 et 5, on voit que le dispositif de blocage 1 comprend une rondelle de basculement 5 qui est disposée autour et à distance de l'élément intérieur 2, dans un logement intérieur annulaire 6 de l'élément extérieur 4. Cette bague 5 présente des axes diamétralement opposés 7 et 8 qui sont disposés dans des trous borgnes intérieurs opposés 9 et 10 de l'élément extérieur 4, de telle sorte que la rondelle 5 peut pivoter selon un axe 11 qui s'étend radialement aux éléments 2 et 4.

Comme on le voit plus précisément sur les figures 1, 2 et 6, le dispositif de blocage 1 comprend en outre, d'un côté de la rondelle de basculement 5, des premiers moyens de blocage 12 qui comprennent une rondelle de blocage 13 disposée autour de l'élément intérieur 2 et dans un logement annulaire intérieur de l'élément extérieur 4. Ce logement 14 présente, d'un côté du plan longitudinal passant par l'axe 11, un rétrécissement médian 15 qui détermine deux appuis longitudinalement opposés 16 et 17, tels que la rondelle de blocage 13 peut pivoter de façon à prendre des positions inclinées par rapport à l'axe des éléments 2 et 4.

De l'autre côté dudit plan longitudinal et à l'opposé du rétrécissement 15, les moyens de blocage 12 comprennent un ressort de compression 18 disposé dans un orifice longitudinal borgne 19 qui débouche dans le logement 14 en direction de la rondelle de basculement 5. Ce ressort 18 agit sur la face 16a de la rondelle 16 de manière à la repousser en direction de la rondelle de basculement 5, par pivotement entre les appuis 15 et 16.

Le dispositif de blocage 6 comprend également une tige d'entretoise longitudinale 20 qui est disposée dans un canal longitudinal 21 de l'élément extérieur 4 qui débouche d'une part dans le logement 6 et d'autre part dans le logement 14. L'une des extrémités de cette tige d'entretoise 20 vient en appui contre la face 5a de la rondelle de basculement 5 et son autre extrémité vient en appui contre la face 16b de la rondelle de blocage 13, à l'opposé du ressort 18.

Comme on le voit plus précisément sur les figures 1, 2 et 3, le dispositif de blocage 1 comprend en outre, de l'autre côté de la rondelle de basculement 5, des seconds moyens de blocage 22 qui sont symétriques aux moyens de blocage 12 par rapport à l'axe radial 11.

Ces moyens de blocage 22 comprennent ainsi une rondelle de blocage 23 disposée autour de l'élément intérieur 2 et dans un logement intérieur 24 de l'élément extérieur 4. Ce logement présente un rétrécissement 25 qui détermine deux appuis 26 et 27 longitudinalement opposés situés sensiblement en alignement longitudinal avec le ressort 18 et la tige d'entretoise 20 des premiers moyens de blocage 12. Les moyens de blocage 22 comprennent également un ressort de compression 28 disposé dans un trou longitudinal borgne 29 de l'élément extérieur 4 et agissant sur la rondelle 23 en direction de la rondelle de basculement 5. Les moyens de blocage 22 comprennent aussi une tige d'entretoise longitudinale 30 coulissant dans un canal longitudinal 31 de l'élément extérieur 4, débouchant d'une part dans le logement 6 et d'autre part dans le logement 24, cette tige entretoise 30 prenant appui d'une part sur la face opposée 5b de la rondelle de basculement 5 et d'autre part sur la rondelle de blocage 23. Le ressort 28 et la tige d'entretoise 30 sont sensiblement en alignement longitudinal avec les appuis 16 et 17 des moyens de blocage 12.

Le dispositif de blocage 1 comprend en outre une tige longitudinale de commande 32 disposée dans un canal longitudinal 33 de l'élément extérieur 4, qui passe à distance de la partie rétrécie 25 du logement 24 et dont l'extrémité 32a vient en appui sur la face 5b de la rondelle de basculement 5, à l'opposé de la tige d'entretoise 20.

Dans l'exemple décrit, l'élément extérieur 4 comprend deux parties 4a et 4b qui présentent entre elles un plan longitudinal de contact 4c qui s'étend perpendiculairement à l'axe radial 11. Ces deux parties 4a et 4b de l'élément extérieur 4 sont reliées entre elles par tous moyens connus non représentés tels que des vis ou autres.

Ainsi, les deux parties 4a et 4b de l'élément extérieur 4 sont symétriques par rapport au plan longitudinal contenant la surface longitudinale de contact 4c, de telle sorte que le canal 3 recevant l'élément intérieur 2, les logements 6, 14 et 24 recevant les rondelles 5, 13 et 23, les trous borgnes 19 et 29 recevant les ressorts 18 et 28 et les canaux 21, 31 et 33 recevant les tiges 20, 30 et 32 sont formés par moitié dans les parties 4a et 4b, symétriquement par rapport au plan de contact 4c.

Le dispositif de blocage 1 fonctionne de la manière suivante.

Lorsque la tige de commande 32 n'est soumise à aucun effort, les ressorts 18 et 28 inclinent les rondelles de blocage 13 et 23 vers la rondelle de basculement 5 jusqu'à les amener dans une position inclinée extrême dans laquelle elles entrent en contact avec l'élément intérieur 20 en deux zones diamétralement opposées situées l'une du côté des parties rétrécies 15 et 27 et l'autre du côté des ressorts 18 et 28. Les rondelles de blocage 13 et 23 étant bloquées longitudinalement dans des parties rétrécies 15 et 25, elles bloquent longitudinalement, chacune dans un sens, l'élément intérieur 2 par rapport à l'élément extérieur 4, qui se trouve ainsi bloqué longitudinalement dans les deux sens par effet de coincement.

En agissant longitudinalement sur la tige de commande 32 en direction de la rondelle de basculement 5, on peut alors faire pivoter cette rondelle de basculement 5 autour de l'axe radial 11. Ce mouvement de basculement est alors transmis aux rondelles de blocage 13 et 23 par l'intermédiaire des tiges entretoises 20 et 30 de manière à les écarter de leur position inclinée extrème de blocage en réduisant leur inclinaison à l'encontre de ressorts 18 et 28.

Ces mouvements de déblocage libèrent l'élément intérieur 2 par rapport à l'élément extérieur 4, qui peuvent alors être coulissés l'un par rapport à l'autre. Lorsqu'ils sont arrivés dans une position longitudinale relative déterminée, on relâche la tige de commande 32. Les ressorts 18 et 28 repoussent alors les rondelles 13 et 23 pour les amener dans leur position de blocage décrite précédemment, en repoussant en même temps les tiges entretoises 20 et 30 et en faisant basculer la rondelle de basculement 5 qui elle-même repousse la tige de commande 32.

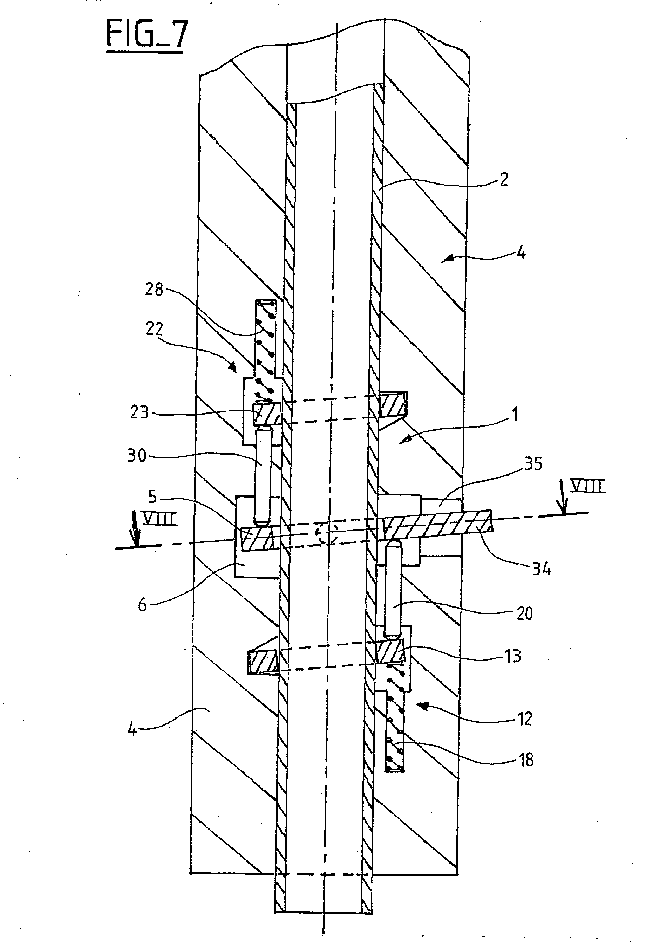

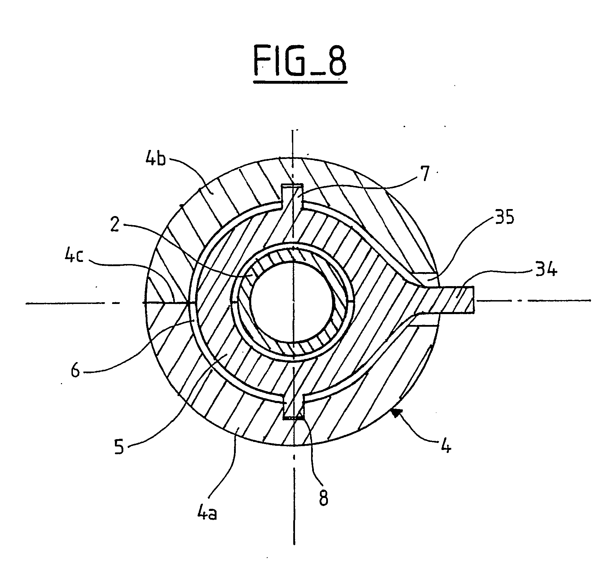

En se reportant aux figures 7 et 8, on voit qu'on a représenté une variante du dispositif de blocage 1 qui s'en différencie par le fait que la tige de commande 32 est supprimée et par le fait que la rondelle de basculement 5 présente un appendice latéral 34 qui s'étend au travers d'un passage 35 traversant la paroi de l'élément extérieur 4 et débouchant dans le logement 6. En agissant manuellement sur cet appendice 34 de l'extérieur et longitudinalement, on peut alors faire basculer la rondelle de basculement 5 comme précédemment de manière à agir sur les rondelles 13 et 23 dans le sens de leur déblocage.

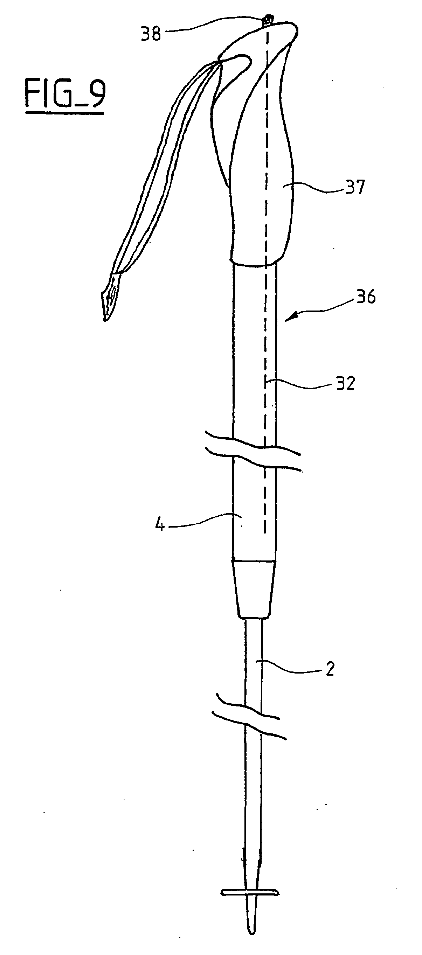

En se reportant à la figure 9, on voit qu'on a représenté un exemple d'application du dispositif de liaison 1 à un bâton 36 par exemple de ski ou de marche, à longueur variable, dont l'élément intérieur 2 constitue sa partie inférieure et dont l'élément extérieur 4 constitue sa partie supérieure. La partie supérieure du bâton 26 présente, à l'opposé de l'élément intérieur 2, une poignée 37, la tige de commande 32 débouchant dans la partie supérieure de cette poignée 37 et portant un bouton 38 d'appui vers le bas permettant d'agir sur le dispositif de blocage 1 par exemple prévu dans la partie inférieure de l'élément extérieur 4.

## Revendications

1. Dispositif de blocage de deux éléments allongés dont un premier coulisse dans un second de façon télescopique, comprenant :
des premiers moyens (12) pour bloquer dans un premier sens longitudinal le premier élément (2) par rapport au second élément (4), qui comprennent une première rondelle de blocage (13) disposée autour du premier élément et dont une partie circonférentielle est placée entre deux premiers appuis longitudinalement opposés dudit second élément et un premier organe élastique de rappel (18) placé entre ledit second élément et ladite première rondelle et agissant dans ledit sens longitudinal sur la première rondelle en un endroit éloigné desdits premiers appuis de manière à amener la première rondelle dans une position inclinée extrême par rapport au premier élément dans laquelle deux parties opposées de cette première rondelle sont en contact avec le premier élément afin de bloquer le premier élément (2) par rapport au second élément (4) dans ledit sens longitudinal ;
des seconds moyens (22) pour bloquer dans l'autre sens longitudinal le premier élément par rapport au second élément qui comprennent une seconde rondelle (23) disposée autour du premier élément et dont une partie circonférentielle est placée entre deux seconds appuis longitudinalement opposés dudit second élément et un second organe élastique de rappel (28) placé entre ledit second élément et ladite seconde rondelle et agissant dans ledit autre sens longitudinal sur la seconde rondelle en un endroit éloigné desdits seconds appuis de manière à amener la seconde rondelle dans une position inclinée extrême par rapport au premier élément dans laquelle deux parties opposées de cette seconde rondelle sont en contact avec le premier élément afin de bloquer le premier élément par rapport au second élément dans ledit autre sens longitudinal ;
un organe de basculement (5) articulé sur ledit second élément ;
un premier organe entretoise (20) placé entre la première rondelle et l'organe de basculement (5);
un second organe entretoise (30) placé entre la seconde rondelle (23) et ledit organe de basculement (5) ;
et un organe de commande (32) permettant d'agir sur l'organe de basculement (5), de telle sorte qu'une action sur cet organe de commande fait basculer l'organe de basculement (5) qui, par l'intermédiaire des organes entretoises (20, 30), agit sur lesdites rondelles (13, 23) de façon à les écarter de leurs positions extrêmes précitées à l'encontre desdits moyens de rappel (18, 28), en réduisant leur inclinaison, afin de libérer le premier élément par rapport au second élément.

2. Dispositif selon la revendication 1, **caractérisé par le fait que** lesdits premiers (12) et seconds (22) moyens de blocage sont disposés de part et d'autre dudit organe de basculement (5), ledit organe de basculement agissant en sens opposés sur lesdits organes entretoises (20, 30).

3. Dispositif selon l'une des revendications 1 et 2, **caractérisé par le fait que** ledit organe de basculement comprend une rondelle (5) qui entoure à distance ledit premier élément et qui est montée de façon articulée sur le second élément, radialement à ce dernier.

4. Dispositif selon l'une quelconque des revendications précédentes, **caractérisé par le fait que** lesdites rondelles (5, 13, 23) sont disposées dans des logements annulaires intérieurs (6, 14, 24) du second élément.

5. Dispositif selon l'une quelconque des revendications précédentes, **caractérisé par le fait que** lesdits organes entretoises comprennent des tiges (20, 30) mobiles longitudinalement dans des canaux du second élément.

6. Dispositif selon l'une quelconque des revendications précédentes, **caractérisé par le fait que** ledit organe de commande comprend une tige (32) mobile longitudinalement dans un canal du second élément.

7. Dispositif selon l'une quelconque des revendications précédentes, **caractérisé par le fait que** ledit organe de commande comprend un prolongement (34) dudit organe de basculement (5), qui s'étend au travers de la paroi dudit second élément.

8. Dispositif selon l'une quelconque des revendications précédentes, **caractérisé par le fait que** le second élément (4) comprend deux parties assemblées (4a, 4b) dont le plan de contact entre elles s'étend selon un plan longitudinal (33) passant par l'axe desdits éléments, que lesdits organes de rappel, lesdits organes entretoises et ledit organe de commande sont disposés entre lesdites parties assemblées du second élément et que ledit organe de basculement (5) est articulé sur le second élément selon un axe (11) perpendiculaire audit plan de contact (4c).

## Claims

1. Device for locking two elongated elements, a first of which slides telescopically in a second, comprising:
first means (12) for locking, in a first longitudinal direction, the first element (2) relative to the second element (4), which comprise a first locking washer (13) arranged around the first element and of which a circumferential portion is placed between two first longitudinally opposed supports of said second element, and a first elastic return member (18) placed between said second element and said first washer and acting in said longitudinal direction on the first washer at a point remote from said first supports so as to bring the first washer into an inclined end position relative to the first element, in which position two opposed portions of this first washer are in contact with the first element in order to lock the first element (2) relative to the second element (4) in said longitudinal direction;
second means (22) for locking, in the other longitudinal direction, the first element relative to the second element, which comprise a second washer (23) arranged around the first element and of which a circumferential portion is placed between two second longitudinally opposed supports of said second element, and a second elastic return member (28) placed between said second element and said second washer and acting in said other longitudinal direction on the second washer at a point remote from said second supports so as to bring the second washer into an inclined end position relative to the first element, in which position two opposed portions of this second washer are in contact with the first element in order to lock the first element relative to the second element in said other longitudinal direction;
a tilting member (5) articulated on said second element;
a first spacer member (20) placed between the first washer and the tilting member (5);
a second spacer member (30) placed between the second washer (23) and said tilting member (5); and
a control member (32) for acting on the tilting member (5), such that an action on this control member causes the tilting member (5) to tilt, which tilting member, by way of the spacer members (20, 30), acts on said washers (13, 23) so as to move them away from their aforementioned end positions counter to said return means (18, 28), thereby reducing their inclination, in order to release the first element relative to the second element.

2. Device according to Claim 1, **characterized in that** said first (12) and second (22) locking means are arranged on either side of said tilting member (5), said tilting member acting in opposite directions on said spacer members (20, 30).

3. Device according to either of Claims 1 and 2, **characterized in that** said tilting member comprises a washer (5) which surrounds said first element at a distance and which is mounted in an articulated manner on the second element, radially to the latter.

4. Device according to any one of the preceding claims, **characterized in that** said washers (5, 13, 23) are arranged in inner annular housings (6, 14, 24) of the second element.

5. Device according to any one of the preceding claims, **characterized in that** said spacer members comprise rods (20, 30) which can move longitudinally in ducts of the second element.

6. Device according to any one of the preceding claims, **characterized in that** said control member comprises a rod (32) which can move longitudinally in a duct of the second element.

7. Device according to any one of the preceding claims, **characterized in that** said control member comprises a continuation (34) of said tilting member (5), which extends through the wall of said second element.

8. Device according to any one of the preceding claims, **characterized in that** the second element (4) comprises two assembled parts (4a, 4b) of which the plane of contact between them extends in a longitudinal plane (4c) passing through the axis of said elements, **in that** said return members, said spacer members and said control member are arranged between said assembled parts of the second element, and **in that** said tilting member (5) is articulated on the second element about an axis (11) perpendicular to said plane of contact (4c).

## Patentansprüche

1. Vorrichtung zur Feststellung von zwei länglichen Elementen, von denen eines in einem zweiten teleskopartig gleitet, umfassend:
erste Mittel (12), um das erste Element (2) in einer ersten Längsrichtung in Bezug zum zweiten Element (4) festzustellen, umfassend eine erste Feststellscheibe (13), die um das erste Element angeordnet ist, und bei der ein Umfangsteil zwischen zwei ersten, sich in Längsrichtung gegenüberliegenden Abstützungen des zweiten Elements angeordnet ist, und ein erstes elastisches Rückstellelement (18), das zwischen dem zweiten Element und der ersten Scheibe angeordnet ist und in Längsrichtung auf die erste Scheibe an einer von den ersten Abstützungen entfernten Stelle einwirkt, um die erste Scheibe in eine äußerste geneigte Position in Bezug zum ersten Element zu bringen, in der zwei gegenüberliegende Teile dieser ersten Scheibe mit dem ersten Element in Kontakt sind, um das erste Element (2) in Bezug zum zweiten Element (4) in Längsrichtung festzustellen;
zweite Mittel (22), um das erste Element in der anderen Längsrichtung in Bezug zum zweiten Element festzustellen, umfassend eine zweite Scheibe (23), die um das erste Element angeordnet ist, und bei der ein Umfangsteil zwischen zwei zweiten sich in Längsrichtung gegenüberliegenden Abstützungen des zweiten Elements angeordnet ist, und ein zweites elastisches Rückstellelement (28), das zwischen dem zweiten Element und der zweiten Scheibe angeordnet ist und in die andere Längsrichtung auf die zweite Scheibe an einer von den zweiten Abstützungen entfernten Stelle einwirkt, um die zweite Scheibe in eine äußerste geneigte Position in Bezug zum ersten Element zu bringen, in der zwei gegenüberliegende Teile dieser zweiten Scheibe mit dem ersten Element in Kontakt sind, um das erste Element in Bezug zum zweiten Element in die andere Längsrichtung festzustellen;
ein Schwenkelement (5), das auf dem zweiten Element angelenkt ist;
ein erstes Querstrebenelement (20), das zwischen der ersten Scheibe und dem Schwenkelement (5) angeordnet ist;
ein zweites Querstrebenelement (30), das zwischen der zweiten Scheibe (23) und dem Schwenkelement (5) angeordnet ist;
und ein Steuerelement (32), das es ermöglicht, auf das Schwenkelement (5) einzuwirken, so dass eine Wirkung auf dieses Steuerelement zum Schwenken des Schwenkelements (5) führt, das mit Hilfe der Querstrebenelemente (20, 30) auf die Scheiben (13, 23) einwirkt, um sie von ihren vorgenannten äußersten Positionen gegen die Rückstellmittel (18, 28) zu entfernen, wobei ihre Neigung verringert wird, um das erste Element in Bezug auf das zweite Element freizugeben.

2. Vorrichtung nach Anspruch 1, **dadurch gekennzeichnet, dass** die ersten (12) und zweiten (22) Feststellmittel beiderseits des Schwenkelements (5) angeordnet sind, wobei das Schwenkelement auf die Querstrebenelemente (20, 30) in entgegengesetzte Richtungen einwirkt.

3. Vorrichtung nach Anspruch 1 oder 2, **dadurch gekennzeichnet, dass** das Schwenkelement eine Scheibe (5) umfasst, die das erste Element mit Abstand umgibt und die gelenkig auf dem zweiten Element radial zu diesem angeordnet ist.

4. Vorrichtung nach einem der vorhergehenden Ansprüche, **dadurch gekennzeichnet, dass** die Scheiben (5, 13, 23) in ringförmigen Innenlagerungen (6, 14, 24) des zweiten Elements angeordnet sind.

5. Vorrichtung nach einem der vorhergehenden Ansprüche, **dadurch gekennzeichnet, dass** die Querstrebenelemente längs in Kanälen des zweiten Elements bewegliche Stangen (20, 30) umfassen.

6. Vorrichtung nach einem der vorhergehenden Ansprüche, **dadurch gekennzeichnet, dass** das Steuerelement eine längs in einem Kanal des zweiten Elements bewegliche Stange (32) umfasst.

7. Vorrichtung nach einem der vorhergehenden Ansprüche, **dadurch gekennzeichnet, dass** das Steuerelement eine Verlängerung (34) des Schwenkelements (5) umfasst, die sich durch die Wand des zweiten Elements erstreckt.

8. Vorrichtung nach einem der vorhergehenden Ansprüche, **dadurch gekennzeichnet, dass** das zweite Element (4) zwei zusammengefügte Teile (4a, 4b) umfasst, deren Kontaktebene sich entlang einer Längsebene (4c) erstreckt, die durch die Achse der Elemente geht, dass die Rückstellelemente, die Querstrebenelemente und das Steuerelement zwischen den zusammengefügten Teilen des zweiten Elements angeordnet sind und dass das Schwenkelement (5) auf dem zweiten Element entlang einer senkrecht zur Kontaktebene (4c) verlaufenden Achse (11) angelenkt ist.
